# EUROPEAN PATENT SPECIFICATION

(11) **EP 3 713 294 B1**
(45) Date of publication and mention of the grant of the patent: **04.01.2023**
(21) Application number: 18877597.7
(22) Date of filing: 05.11.2018
(51) Int. Cl.: H04W 36/00, H04W 88/08

(54) **METHOD AND DEVICE FOR PSCELL SWITCHING**
VERFAHREN UND VORRICHTUNG ZUR PSCELL-UMSCHALTUNG
PROCÉDÉ ET DISPOSITIF DE COMMUTATION DE PSCELL

(30) Priority: 17.11.2017 CN 201711147407
(43) Date of publication of application: 23.09.2020
(73) Proprietor: Datang Mobile Communications Equipment Co., Ltd., Beijing 100085 (CN)
(72) Inventor: LIU, Aijuan, Beijing 100191 (CN)
(74) Representative: Körfer, Thomas
(86) International application number: PCT/CN2018/114018
(87) International publication number: WO 2019/096023

(56) References cited:
- WO-A1-2017/022166
- CN-A- 104 902 580
- "3rd Generation Partnership Project; Technical Specification Group Radio Access Network; NG-RAN; Architecture description (Release 15)", 3GPP STANDARD; TECHNICAL SPECIFICATION; 3GPP TS 38.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V0.4.1, 10 November 2017 (2017-11-10), pages 1-25, XP051391686, [retrieved on 2017-11-10]
- SAMSUNG ET AL: "TP for Supporting MN Initiate SN Change", 3GPP DRAFT; R3-174221, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Prague, Czech Republic; 20171009 - 20171013 13 October 2017 (2017-10-13), XP051356896, Retrieved from the Internet: URL:http://www.3gpp.org/ftp/tsg_ran/WG3_Iu /TSGR3_97bis/Docs/ [retrieved on 2017-10-13]
- LG ELECTRONICS INC: "Issue on Inter-gNB-DU Mobility using SCG SRB (EN-DC)", 3GPP DRAFT; R3-174085 ISSUE ON INTER-GNB-DU MOBILITY USING SCG SRB_EN-DC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG3, no. Prague, Czech Republic; 20171009 - 20171013 9 October 2017 (2017-10-09), XP051344428, Retrieved from the Internet: URL:http://www.3gpp.org/ftp/Meetings_3GPP_ SYNC/RAN3/Docs/ [retrieved on 2017-10-09]
- HUAWEI: "pCR on mobility aspects to 38.401", 3GPP DRAFT; R3-174124 PCR ON MOBILITY ASPECTS TO 38.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Prague, Czech; 20171009 - 20171013 13 October 2017 (2017-10-13), XP051356814, Retrieved from the Internet: URL:http://www.3gpp.org/ftp/tsg_ran/WG3_Iu /TSGR3_97bis/Docs/ [retrieved on 2017-10-13]
- "3rd Generation Partnership Project; Technical Specification Group Radio Access Network; NG-RAN; Architecture Description (Release 15", 3GPP TS 38.401, vol. RAN WG3, no. V0.4.1, 9 November 2017 (2017-11-09), - 31 October 2017 (2017-10-31), page 17, XP051391666,

## Description

### Field

The present disclosure relates to the technology field of communications, and particularly to a method and device for PSCell change.

### Background

In the long term evolution (hereinafter "LTE") system or a fourth-generation (hereinafter "4G") network, the evolved universal mobile telecommunications service terrestrial radio access network (hereinafter "E-UTRAN") includes a plurality of evolved node Bs or evolved base stations (hereinafter "eNodeBs"). The eNodeBs are connected to an evolved packet core (hereinafter "EPC") through S1 interfaces, and the eNodeBs interconnect through X2 interfaces. In the 5G system, central units (hereinafter "CUs") are introduced for centralized control and scheduling. The radio resource control (hereinafter RRC") functions and some layer 2 or / and layer 1 functions of 5G base stations are implemented by the CUs, and other functions of the 5G base stations are implemented by distribute units (hereinafter "DUs"). NG interfaces through which the 5G base stations are connected to the 5G core network (hereinafter "5GC") terminate in the CUs, and Xn interfaces through which the 5G base stations interconnect also terminate in the CUs.

5G supports tight interworking of the LTE system and the 5G system. However, there is no existing solution to the problem of how to handle primary secondary cell (hereinafter "PSCell") change of user equipment (hereinafter "UE") when the LTE system interwork tightly with the 5G system and secondary nodes (hereinafter "SNs"), which are 5G base stations, are split up between the CUs and DUs.
3GPP TS 38.401 V0.4.1 discloses, in section 8.2.2.1, an inter-gNB-DU mobility procedure used for the case the UE moves from one gNB-DU to another gNB-DU within the same gNB-CU when only MCG SRB is available during EN-DC operation. The inter-gNB-DU mobility procedure using MCG SRB in EN-DC includes: 1. the UE sends a Measurement Report message to the MeNB. 2. The MeNB sends an SgNB Modification Request. 3. The gNB-CU sends an UE Context Setup Request message to the target gNB-DU to create an UE context and setup one or more bearers. 4. The target gNB-DU responds the gNB-CU with an UE Context Setup Response message. 5. The gNB-CU responds the MeNB with an SgNB Modification Request Acknowledge message. 6. The gNB-CU sends a UE Mobility Command message to the source gNB-DU indicating to stop the data transmission to the UE. The source gNB-DU also sends a Downlink Data Delivery Status frame to inform the gNB-CU about the unsuccessfully transmitted downlink data to the UE.
Samsung, in 3GPP DRAFT R3-174221 discloses a SN Modification procedure. In this procedure, the SN responds with the SgNB Modification Request Acknowledge message, which may contain SCG radio resource configuration information within a NR RRC configuration message and data forwarding address information (if applicable). In case of SCG Change, for E-RABs configured with the MCG split bear option for which no bearer type change is performed, the SN provides a new DL GTP TEID to the MN. The MN shall continue sending DL PDCP PDUs to the SN with the previous DL GTP TEID until it performs PDCP re-establishment or PDCP data recovery, and use the new DL GTP TEID starting with the PDCP re-establishment or data recovery. In case of SCG change, for E-RABs configured with the SCG split bearer option for which no bearer type change is performed, the SN provides a new UL GTP TEID to the MN. The MN shall continue sending UL PDCP PDUs to the SN with the previous UL GTP TEID until it re-establishes the RLC and use the new UL GTP TEID after re-establishment.

### Summary

Embodiments of the disclosure provide a method and a device for PSCell change so as to provide a solution to the problem of how to handle PSCell change of UE when the LTE system interwork tightly with the 5G system and the SNs are split up between the CUs and DUs.

An embodiment of the disclosure provides a method for PSCell change. The method is applied to a LTE-5GC tight interworking scenario, and secondary nodes, SNs, in the LTE-5GC tight interworking scenario are split up between central units, CUs, and distribute units, DUs. The method includes: receiving, by central unit of gNodeB (gNB-CU) in a secondary node (SN), a Measurement Report message from a UE; determining, by the gNB-CU, that whether a PSCell change can be performed for the UE according to a measurement result included in the Measurement Report message,determining, by the gNB-CU, that the UE moves from a source distribute unit of gNodeB (gNB-DU) to a target gNB-DU according to the Measurement Report message when determining that the PSCell of the UE can be changed; and transmitting, by the SN, a message including a tunnel end point identifier (hereinafter "TEID") to a master node (hereinafter "MN"), so that the MN and the UE exchange data via the target gNB-DU. The target gNB-DU is a node that provides NR user plane and control plane protocol termination towards the UE and is connected to the 5G core network (hereinafter "5GC") via the NG interface. The TEID identifies a data link between the target gNB and the MN

According to an implementation mode of the embodiment of the disclosure, after the target gNB-DU is determined, the method further includes: transmitting, by the SN, a message indicating the target gNB-DU to the UE via a secondary cell group signaling radio bearer (hereinafter "SCG SRB") so that the UE performs random access procedure with the target gNB-DU.

According to an implementation mode of the embodiment of the disclosure, transmitting the message including the TEID of downlink data to the MN includes: generating, by the SN, a new message including the TEID, and transmitting, by the SN, the new message to the MN

According to an implementation mode of the embodiment of the disclosure, transmitting the message including the TEID of downlink data to the MN includes: carrying, by the SN, the TEID in a SgNB Modification Required message; and transmitting, by the SN, the SgNB Modification Required message to the MN

According to an implementation mode of the embodiment of the disclosure, after determining the target gNB-DU, the method further includes: transmitting, by the SN, a request for moving the UE from the source gNB-DU to the target gNB-DU, so that the target gNB-DU creates a context for the UE.

According to an implementation mode of the embodiment of the disclosure, after determining that the UE moves from the source gNB-DU to the target gNB-DU, the method further includes: transmitting, by the SN, a message indicating that the UE moves from the source gNB-DU to the target gNB-DU to the source gNB-DU to stop the source gNB-DU from transmitting data to the UE.

According to an implementation mode of the embodiment of the disclosure, after transmitting the message including the TEID of downlink data to the MN, the method further includes: receiving, by the SN, uplink data transmitted by the UE; and determining, by the SN, that the uplink data is a main cell group (hereinafter "MCG") split bearer, and forwarding the uplink data to the MN; or, determining, by the SN, that the uplink data is an SCG split bearer, and forwarding the uplink data to the gNB-CU.

The embodiment of the disclosure also provides an SN device. The device is applied to a LTE-5GC tight interworking scenario and secondary nodes, SNs, in the LTE-5GC tight interworking scenario are split up between central units, CUs, and distribute units, DUs. The device includes a determine unit and a first transmit unit. The determine unit is configured to receive a Measurement Report message from a UE, determine that whether a PSCell change can be performed for the UE according to a measurement result included in the Measurement Report message, and determine that the UE moves from a source gNB-DU to a target gNB-DU according to the Measurement Report message when determining that the PSCell of the UE can be changed. The first transmit unit is configured to transmit a message including a TEID to an MN, so that the MN and the UE exchange data via the target gNB-DU, where the TEID identifies a data link between the target gNB and the MN

According to an implementation mode of the embodiment of the disclosure, the device further includes a second transmit unit configured to: transmit a message indicating the target gNB-DU to the UE via an SCG SRB so that the UE performs random access procedure with the target gNB-DU.

According to an implementation mode of the embodiment of the disclosure, the device further includes a generate unit configured to: generate a new message including the TEID and transmit the new message to the MN

According to an implementation mode of the embodiment of the disclosure, the device further includes a third transmit unit configured to: carry the TEID in a SgNB Modification Required message and transmit the SgNB Modification Required message to the MN

According to an implementation mode of the embodiment of the disclosure, the device further includes a fourth transmit unit configured to: transmit a request for moving the UE from the source gNB-DU to the target gNB-DU, so that the target gNB-DU creates a context for the UE.

According to an implementation mode of the embodiment of the disclosure, the device further includes a fifth transmit unit configured to: transmit a message indicating that the UE moves from the source gNB-DU to the target gNB-DU to the source gNB-DU to stop the source gNB-DU from transmitting data to the UE.

According to an implementation mode of the embodiment of the disclosure, the device further includes a sixth transmit unit configured to: receive uplink data transmitted by the UE after the message including the TEID of downlink data is transmitted to the MN; and determine that the uplink data is an MCG split bearer, and forward the uplink data to the MN; or, determine that the uplink data is an SCG split bearer, and forward the uplink data to the gNB-CU.

The embodiment of the disclosure further includes a computer-readable storage medium. The storage medium stores a computer program. When the computer program is executed by a processor of a secondary node, SN, the processor performs the method for PSCell change above.

One or more of the above-mentioned technical solutions according to the embodiment of the disclosure at least have the one or more following technical effects.

By determining the target gNB-DU for the PScell change and transmitting the message including the TEID through the SN so that the MN and the UE exchanges data via the target gNB-DU, where the TEID identifies the data link between the target gNB-DU and the MN, the technical solutions according to the embodiment of the disclosure provides a solution for PSCell change in the scenario of LTE-5GC tight interworking with the SN split up between CUs and DUs, and solves the problem of how to handle PSCell change of the UE when the LTE system interwork tightly with the 5G system and the SNs are split up between the CUs and DUs.

Moreover, since the SN sends the message indicating the target gNB-DU to the UE via the SCG SRB so that the UE performs random access procedure with the target gNB-DU, not that the MN sends the message indicating the target gNB-DU to the UE, the method according to the embodiment of the disclosure avoids increasing the amount of data transmission, and thus is able to reduce the data transmission amount and increase the efficiency of the PSCell change.

### Brief Description of the Drawings

In order to describe the embodiments of the disclosure or the technical solutions in the related art more clearly, drawings illustrating embodiments of the disclosure are briefly introduced below. Apparently, the drawings described below only illustrate a part of the embodiments of the disclosure.
FIG. 1 is a schematic diagram of two architectures of LTE-5GC tight interworking scenario according to an embodiment of the disclosure.
Fig. 2 is a flow chart of a method for PSCell change according to the embodiment of the disclosure.
Fig. 3 is a schematic diagram of information exchange during the procedure for PSCell change according to the embodiment of the disclosure.
Fig. 4 is a flow chart of a first implementation method of operation S102 according to the embodiment of the disclosure.
Fig. 5 is a schematic diagram of a structure of a new message including a TEID according to an embodiment of the disclosure.
Fig. 6 is a flow chart of a second implementation method of operation S102 according to the embodiment of the disclosure.
Fig. 7 is a schematic diagram of a structure of a SgNB Modification Required message including a TEID according to the embodiment of the disclosure.
Fig. 8 is a flow chart of some other operations of the method for PSCell change according to the embodiment of the disclosure.
Fig. 9 is a schematic diagram of a structure of a device for PSCell change according to the embodiment of the disclosure.

### Detailed Description of the Embodiments

In order to make the objects, technical solutions, and advantages of the embodiments of the disclosure more apparent, the technical solutions according to the embodiments of the disclosure will be described below clearly and fully with reference to the accompanying drawings. Apparently the embodiments to be described below are only a part but not all of the embodiments of the disclosure. Based upon the embodiments of the disclosure described herein, all other embodiments which can occur to those ordinarily skilled in the art without making any inventive effort shall fall into the scope of the disclosure.

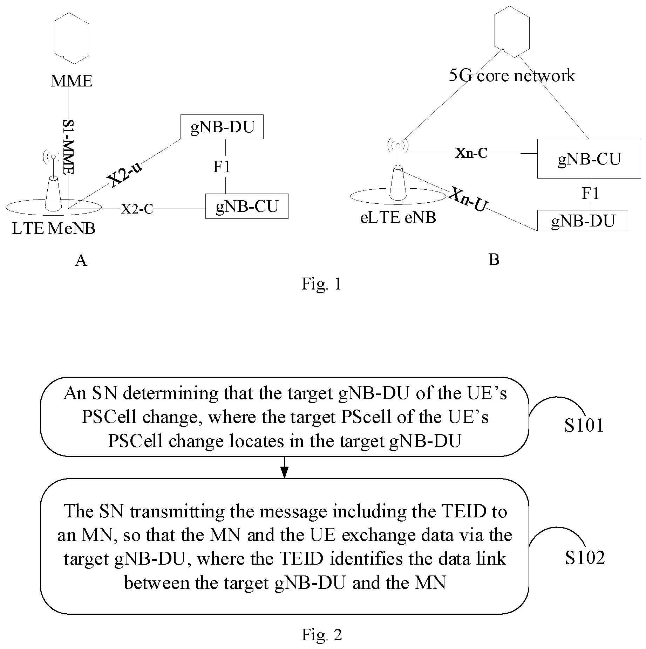

Fig. 1 illustrates two architectures of the LTE-5GC tight interworking scenario, where LTE base stations or LTE MeNBs, act as the MNs, and gNBs in the 5GC act as SNs. The SNs are split up between CUs and DUs, gNB-CUs represent CUs of the SNs, and gNB-DUs represent DUs of the SNs. Each of the SNs includes a gNB-CU and multiple gNB-DUs. In the first architecture of the scenario (scenario A of Fig. 1), the SN is connected to the 5GC via the MN, i.e., the LTE MeNB. In the second architecture of the scenario, both the SN and the MN are connected to the 5GC (scenario B of Fig. 1).

Fig. 2 illustrates a method for PSCell change applicable to the LTE-5GC tight interworking scenario illustrated by Fig. 1, where the SNs are split up between the CUs and DUs. The method includes operations S101 and S102.

The operation S101: the SN determining that the target gNB-DU of the UE's PSCell change, where the target PScell of the UE's PSCell change locates in the target gNB-DU.

The operation S102: the SN transmitting the message including the TEID to an MN, so that the MN and the UE exchange data via the target gNB-DU, where the TEID identifies the data link between the target gNB-DU and the MN

According to the embodiments of the disclosure, the operation S101 in the above method is firstly performed, that is, the SN determines that the target gNB-DU of the UE's PSCell change, where the target PScell of the UE's PSCell change locates in the target gNB-DU.

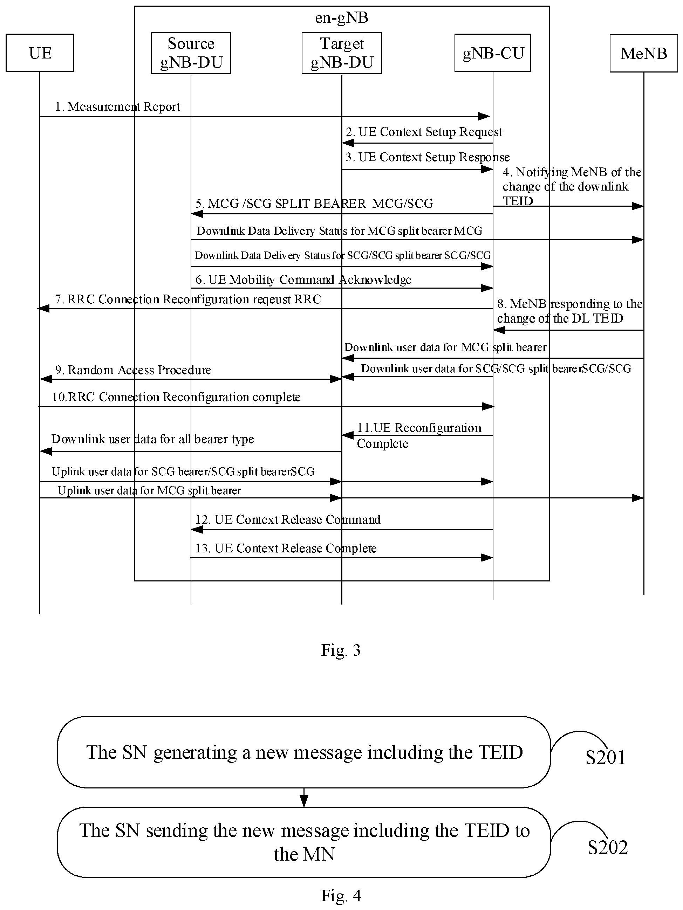

As illustrated by Fig. 3, in practice, the UE measures a wireless network periodically and sends a Measurement Report message indicating the measurement result to the gNB-CU of the SN. After having received the Measurement Report message, the gNB-CU determines whether a PSCell change can be performed for the UE according to the measurement result included in the Measurement Report message. When determining that the PSCell of the UE can be changed, the gNB-CU determines that the target PSCell locates in the target gNB-DU according to the Measurement Report message.

According to the embodiments of the disclosure, the operation S102 in the above method is performed after the operation S101, that is, the SN transmits the message including the TEID to an MN, so that the MN and the UE exchange data via the target gNB-DU, where the TEID identifies the data link between the target gNB and the MN, is performed after the operation S101.

As illustrated by Fig. 3, after determining that the target gNB-DU, and where the target PSCell locates in the target gNB-DU, the gNB-CU transmits the message including the TEID to the MN (i.e., the MeNB in Fig. 3). The TEID identifies the data link between the target gNB-DU and the MN. In practice, the gNB-CU may send the message including the TEID to the MN via an X2 interface or an Xn interface. After receiving the message including the TEID, the MN determines the target gNB-DU according to the TEID so that the MN and the UE exchange data via the target gNB-DU in consequent communication. The MN may also send a confirmation message confirming reception of the message including the TEID to the gNB-CU after receving the message including the TEID.

The operation S102 may be implemented in two different ways as follows.

Fig. 4 illustrates the first implementation method of S102, which includes operations S201 and S202.

Operation S201: the SN generating a new message including the TEID.

Operation S202: the SN sending the new message including the TEID to the MN

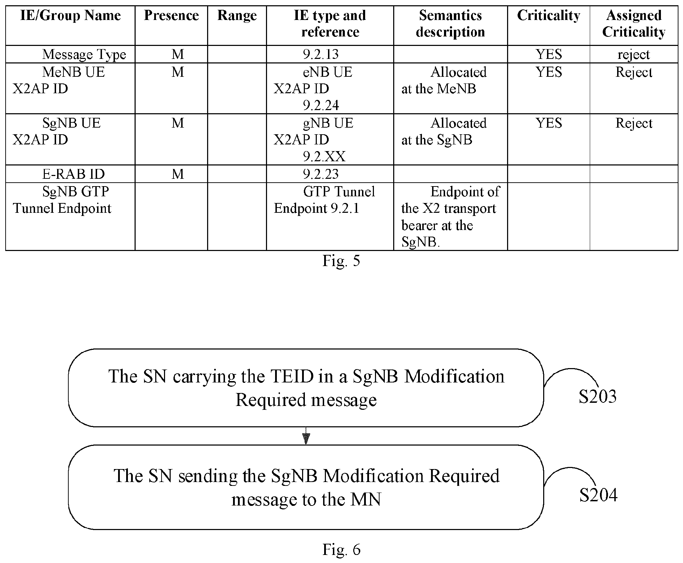

Specifically, the gNB-CU may generate the new message to send the TEID identifying the data link between the target gNB-DU and the MN to the MN. The new message may be a SgNB tunnel change message. Fig. 5 illustrates a structure of the SgNB tunnel change message, which may have other structures as well. The structure illustrated by Fig. 5 is taken as an example herein. Then after generating the SgNB tunnel change message illustrated by Fig. 5, the gNB-CU sends the SgNB tunnel change message to the MN. After receiving the SgNB tunnel change message, the MN determines the target gNB-DU according to the TEID in the SgNB tunnel change message so that the MN and the UE exchange data via the target gNB-DU in consequent communication. For example, the MN may send downlink data for MCG split bearer to the target gNB-DU. After receiving the message including the TEID, the MN may also send a confirmation message confirming reception of the message including the TEID to the gNB-CU.

As illustrated by Fig. 6, the second implementation method of the operation S102 includes operations S203 and S204.

Operation S203: the SN carrying the TEID in a SgNB Modification Required message.

Operation S204: the SN sending the SgNB Modification Required message to the MN

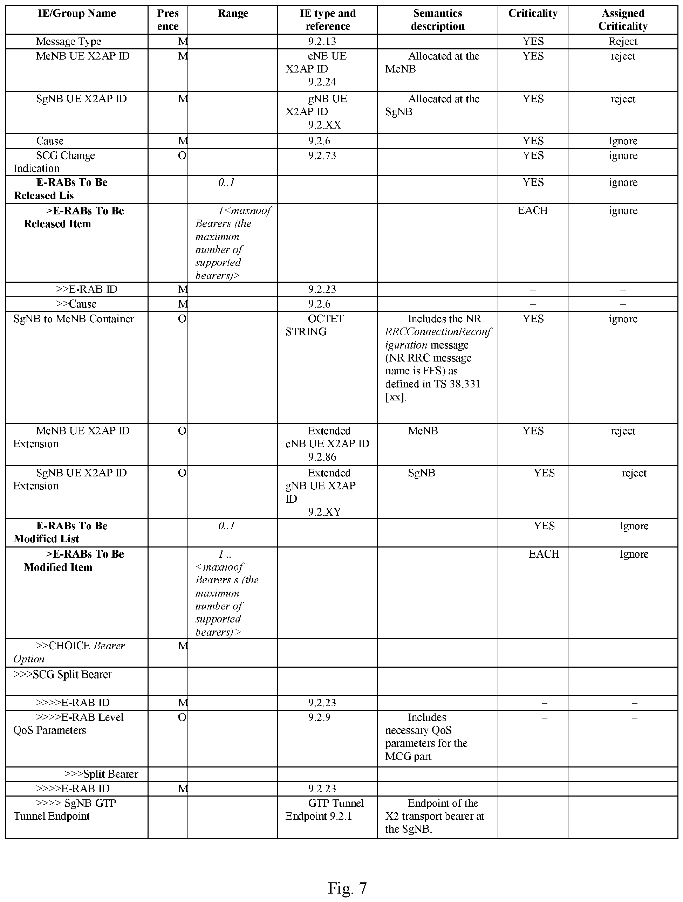

Specifically, the gNB-CU carries the TEID, which identifies the data link between the target gNB-DU and the MN, in the existed SgNB Modification Required message. Fig. 7 illustrates a structure of the SgNB Modification Required message including the TEID. The SgNB Modification Required message may have other structures, and the structure illustrated by Fig. 7 is taken as an example herein, where information related to the TEID is added into the last three lines of the structure of the gNB Modification Required message. After the gNB-CU sends to the MN the gNB Modification Required message whose structure is illustrated by Fig. 7, the MN is able to determine the target gNB-DU according to the TEID in the gNB Modification Required message, so that the MN and the UE exchange date in consequent communication. For example, the MN may send the downlink data for MCG split bearer to the target gNB-DU. After receiving the message including the TEID, the MN sends a confirmation message confirming reception of the message including the TEID to the gNB-CU.

An operation A may be performed after S101 is performed.

Operation A: the SN sends a request for PSCell change of the UE to the target gNB-DU, so that the target gNB-DU creates a context for the UE.

The operation A can be performed together with the operation S102, or can be performed before or after the operation S102.

As illustrated by Fig. 3, after determining the target gNB-DU, the gNB-CU sends a UE Context Setup Request message to the target gNB-DU. After receiving the UE Context Setup Request message, the target gNB-DU creates the context for the UE to prepare for the PSCell change. After receiving the UE Context Setup Request message, the target gNB-DU can also respond the gNB-CU with a UE Context Setup Response message.

After the operation S101 is performed, an operation B may be performed.

Operation B: the SN sends a message indicating the target gNB-DU of the UE's PSCell change to the UE via a SCG SRB so that the UE performs random access procedure with the target gNB-DU.

The order of performing operations A, B and S102 is not limited herein.

As illustrated by Fig. 3, after determining the target gNB-DU, the gNB-CU sends the message indicating the target gNB-DU to the UE using the SCG SRB. In practice, the gNB-CU sends the SCG SRB to a source gNB-DU, where the UE moves from the source gNB-DU to the target gNB-DU for the PSCell change. Then the source gNB-DU (i.e. the Source gNB-DU in Fig. 3) sends the SCG SRB (i.e., an RRC Connection Reconfiguration message) to the UE. After receiving the SCG SRB (i.e., the RRC Connection Reconfiguration message), the UE initiates a random-access procedure with the target gNB-DU. After the random-access procedure is completed, the UE sends an RRC Reconnection Complete message to the gNB-CU.

After receiving the RRC Reconnection Complete message sent from the UE, the gNB-CU sends a UE Context Release Command message to the source gNB-DU. After receiving the UE Context Release Command, the source gNB-DU releases the UE context and responds the gNB-CU with a UE Context Release Complete message.

After receiving the RRC Connection Complete message sent from the UE, the gNB-CU sends a UE Reconfiguration complete message to the target gNB-DU. After receiving the UE Reconfiguration complete message, the target gNB-DU sends a downlink packet to the UE and uplink data can be sent from the UE to the target gNB-DU.

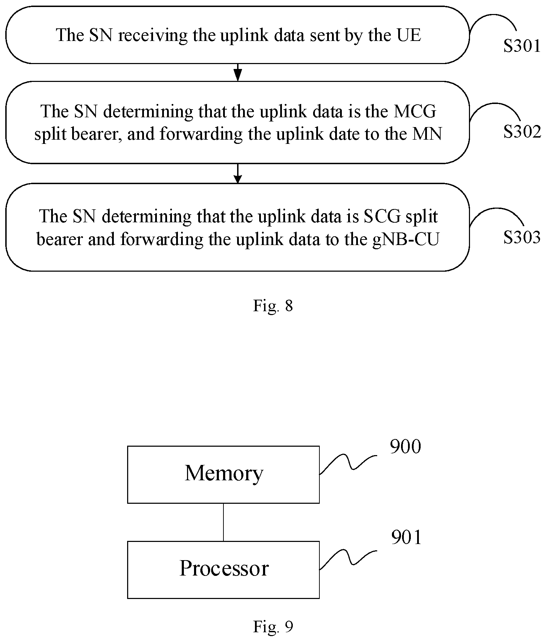

As illustrated by Fig. 8, in practice, when the target gNB-DU receives the uplink data sent from the UE, the following operations S301-S303 may be performed.

Operation S301: the SN receiving the uplink data sent by the UE.

Operation S302: the SN determining that the uplink data is the MCG split bearer, and forwarding the uplink date to the MN

Or, operation S303: the SN determining that the uplink data is SCG split bearer and forwarding the uplink data to the gNB-CU.

That is, when the UE sends the uplink data to the target gNB-DU and the target gNB-DU receives the uplink data from the UE, if the target gNB-DU determines that the received uplink data packet is the MCG split bearer, the target gNB-DU forwards to uplink data packet to the MN; or, if the target gNB-DU determines that the uplink data is the SCG split bearer, the target gNB-DU forwards the uplink data packet to the gNB-CU. The gNB-CU may also send downlink data for SCG bearer or SCG split bearer to the target gNB-DU.

In practice, after the operation S101 is performed, an operation C may be performed.

Operation C: the SN sends a message indicating the PSCell change of the UE to the source gNB-DU to stop the source gNB-DU from sending data to the UE.

As illustrated by Fig. 3, after determining the target gNB-DU, the gNB-CU may send a UE Mobility Command message to the source gNB-DU to stop the gNB-DU from sending data to the UE. The source gNB-DU may also send a downlink data transmission indication message to the MN to indicate delivery status of the SCG part in the MCG split bearer. It may also send a downlink data transmission indication message to the gNB-CU to indicate delivery status of the SCG part in the SCG bear or the SCG split bearer.

As such, by determining the target gNB-DU for the PScell change of the UE and transmitting the message including the TEID through the SN so that the MN and the UE exchanges data via the target gNB-DU, where the TEID identifies the data link between the target gNB-DU and the MN, the method according to the embodiment of the disclosure provides a solution for PSCell change in the scenario of LTE-5GC tight interworking with the SN split up between CUs and DUs, and solves the problem of how to handle PSCell change of the UE when the LTE system interwork tightly with the 5G system and the SNs are split up between the CUs and DUs.

Moreover, since the SN sends the message indicating the target gNB-DU to the UE via the SCG SRB so that the UE performs random access procedure with the target gNB-DU, not that the MN sends the message indicating the target gNB-DU to the UE, the method according to the embodiment of the disclosure avoids increasing the amount of data transmission, and thus is able to reduce the data transmission amount and increase the efficiency of the PSCell change.

Based on the same inventive conception, as illustrated by Fig. 9, the embodiment of the disclosure provides a device for PSCell change. For implementation of the PSCell change by the device, please refer to the above-mentioned description of the method. The device includes a memory 900 and a processor 901. The memory 900 is configured to store computer program instructions. The processor 901 is configured to execute the computer program instructions in the memory to: determine that a target gNB-DU of UE's PSCell change, where a target PSCell of the UE's PSCell change locates in the target gNB-DU; and transmit a message including a TEID to an MN, so that the MN and the UE exchange data via the target gNB-DU, where the TEID identifies a data link between the target gNB-DU and the MN

Optionally, the processor 901 is further configured to: transmit a message indicating the target gNB-DU of the UE's PSCell change to the UE via an SCG SRB so that the UE performs random access procedure with the target gNB-DU, after the target gNB-DU is determined.

Optionally, the processor 901 is further configured to: generate a new message including the TEID and transmit the new message to the MN

Optionally, the processor 901 is further configured to: carry the TEID in a SgNB Modification Required message and transmit the SgNB Modification Required message to the MN

Optionally, the processor 901 is further configured to: transmit a request for the PSCell change of the UE to the target gNB-DU, so that the target gNB-DU creates a context for the UE, after the target gNB-DU is determined.

Optionally, the processor 901 is further configured to: transmit a message indicating the PSCell change of the UE to a source gNB-DU to stop the source gNB-DU from transmitting data to the UE, after the target gNB-DU is determined.

Optionally, the processor 901 is further configured to: receive uplink data transmitted by the UE after the message including the TEID of downlink data is transmitted to the MN; and determine that the uplink data is an MCG split bearer, and forward the uplink data to the MN; or, determine that the uplink data is an SCG split bearer, and forward the uplink data to the gNB-CU.

Based on the same inventive conception, the embodiment of the disclosure provides an SN device. For implementation of the PSCell change by the device, please refer to the above-mentioned description of the method. The device includes a determine unit and a first transmit unit. The determine unit is configured to determine that a target gNB-DU of UE's PSCell change, where a target PSCell of the UE's PSCell change locates in a target gNB-DU. The first transmit unit is configured to transmit a message including a TEID to an MN, so that the MN and the UE exchange data via the target gNB-DU, where the TEID identifies a data link between the target gNB-DU and the MN

Optionally, the device further includes a second transmit unit configured to: transmit a message indicating the target gNB-DU of the UE's PSCell change to the UE via an SCG SRB so that the UE performs random access procedure with the target gNB-DU.

Optionally, the device further includes a generate unit configured to: generate a new message including the TEID and transmit the new message to the MN

Optionally, the device further includes a third transmit unit configured to: carry the TEID in a SgNB Modification Required message and transmit the SgNB Modification Required message to the MN

Optionally, the device further includes a fourth transmit unit configured to: transmit a request for the PSCell change of the UE to the target gNB-DU, so that the target gNB-DU creates a context for the UE.

Optionally, the device further includes a fifth transmit unit configured to: transmit a message indicating the PSCell change of the UE to a source gNB-DU to stop the source gNB-DU from transmitting data to the UE.

Optionally, the device further includes a sixth transmit unit configured to: receive uplink data transmitted by the UE after the message including the TEID of downlink data is transmitted to the MN; and determine that the uplink data is an MCG split bearer, and forward the uplink data to the MN; or, determine that the uplink data is an SCG split bearer, and forward the uplink data to the gNB-CU.

Based on the same inventive conception, the embodiment of the disclosure further provides a computer-readable storage medium. The storage medium stores a computer program. When the computer program is executed by the processor, the processor performs the method for PSCell change above.

Those skilled in the art shall appreciate that the embodiments of the disclosure can be embodied as a method, a system or a computer program product. Therefore, the disclosure can be embodied in the form of an all-hardware embodiment, an all-software embodiment or an embodiment of software and hardware in combination. Furthermore the disclosure can be embodied in the form of a computer program product embodied in one or more computer useable storage mediums (including but not limited to a disk memory, an optical memory, etc.) in which computer useable program codes are contained.

The disclosure has been described in a flow chart and/or a block diagram of the method, the apparatus (system) and the computer program product according to the embodiments of the disclosure. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing apparatus to produce a machine so that the instructions executed on the computer or the processor of the other programmable data processing apparatus create means for performing the functions specified in the flow(s) of the flow chart and/or the block(s) of the block diagram.

These computer program instructions can also be stored into a computer readable memory capable of directing the computer or the other programmable data processing apparatus to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing apparatus so that a series of operational operations are performed on the computer or the other programmable data processing apparatus to create a computer implemented process so that the instructions executed on the computer or the other programmable apparatus provide operations for performing the functions specified in the flow(s) of the flow chart and/or the block(s) of the block diagram.

Evidently those skilled in the art can make various modifications and variations to the disclosure without departing from the scope of the disclosure. Thus the disclosure is also intended to encompass these modifications and variations thereto so long as the modifications and variations come into the scope of the claims appended to the disclosure.

## Claims

1. A method for PSCell change applicable to a LTE-5GC tight interworking scenario, wherein secondary nodes, SNs, in the LTE-5GC tight interworking scenario are split up between central units, CUs, and distribute units, DUs, **characterized in that**, the method comprises:
receiving, by a central unit of gNodeB, gNB-CU, in a secondary node, SN, a Measurement Report message from a User Equipment;
determining, by the gNB-CU, that whether a PSCell change can be performed for the UE according to a measurement result included in the Measurement Report message, and determining (S101), by the gNB-CU, that the UE moves from a source distribute unit of gNodeB, gNB-DU, to a target gNB-DU according to the Measurement Report message when determining that the PSCell of the UE can be changed; and
transmitting (S102), by the SN, a message comprising a tunnel end point identifier, TEID, to a master node, MN, so that the MN and the UE exchange data via the target gNB-DU, wherein the TEID identifies a data link between the target gNB-DU and the MN

2. The method according to claim 1, after determining the target gNB-DU, further comprises:
transmitting, by the SN, a message indicating the target gNB-DU to the UE via a secondary cell group signaling radio bearer, SCG SRB so that the UE performs random access procedure with the target gNB-DU.

3. The method according to claim 1, wherein the transmitting the message comprising the TEID to the MN comprises:
generating (S201), by the SN, a new message comprising the TEID; and
transmitting (S202), by the SN, the new message to the MN

4. The method according to claim 1, wherein the transmitting the message comprising the TEID to the MN comprises:
carrying (S203), by the SN, the TEID in a SgNB Modification Required message; and
transmitting (S204), by the SN, the SgNB Modification Required message to the MN

5. The method according to any one of the claims 1-4, after determining the target gNB-DU, further comprises:
transmitting, by the SN, a request for moving the UE from the source gNB-DU to the target gNB-DU, so that the target gNB-DU creates a context for the UE.

6. The method according to any one of the claims 1-4, after determining that the UE moves from the source gNB-DU to the target gNB-DU, further comprises:
transmitting, by the SN, a message indicating that the UE moves from the source gNB-DU to the target gNB-DU, to the source gNB-DU to stop the source gNB-DU from transmitting data to the UE.

7. The method according to any one of the claims 1-4, after transmitting the message comprising the TEID to the MN, further comprises:
receiving (S301), by the SN, uplink data transmitted by the UE; and
determining (S302), by the SN, that the uplink data is a main cell group, MCG, split bearer, and forwarding the uplink data to the MN; or,
determining (S303), by the SN, that the uplink data is an SCG split bearer, and forwarding the uplink data to the gNB-CU.

8. An SN device for PSCell change applicable to a LTE-5GC tight interworking scenario, wherein secondary nodes, SNs, in the LTE-5GC tight interworking scenario are split up between central units, CUs, and distribute units, DUs, **characterized in that**, the SN device comprises:
a determine unit configured to receive a Measurement Report message from a UE, determine that whether a PSCell change can be performed for the UE according to a measurement result included in the Measurement Report message, and determine that the UE moves from a source gNB-DU to a target gNB-DU according to the Measurement Report message when determining that the PSCell of the UE can be changed; and
a first transmit unit configured to transmit a message comprising a TEID to an MN, so that the MN and the UE exchange data via the target gNB-DU, wherein the TEID identifies a data link between the target gNB-DU and the MN

9. The SN device according to claim 8, wherein the SN device comprises a second transmit unit, and the second transmit unit is configured to:
transmit a message indicating the target gNB-DU to the UE via an SCG SRB so that the UE performs random access procedure with the target gNB-DU, after the target gNB-DU is determined.

10. The SN device according to claim 8, wherein the SN device comprises a generate unit, and the generate unit is configured to:
generate a new message comprising the TEID; and
transmit the new message to the MN

11. The SN device according to claim 8, wherein the SN device comprises a third transmit unit, and the third transmit unit is configured to:
carry the TEID in a SgNB Modification Required message; and
transmit the SgNB Modification Required message to the MN

12. The SN device according to any one of the claims 8-11, wherein the SN device comprises a fourth transmit unit, and the fourth transmit unit is configured to:
transmit a request for moving the UE from the source gNB-DU to the target gNB-DU, so that the target gNB-DU creates a context for the UE, after the target gNB-DU is determined.

13. The SN device according to any one of the claims 8-11, wherein the SN device comprises a fifth transmit unit, and the fifth transmit unit is configured to:
transmit a message indicating that the UE moves from the source gNB-DU to the target gNB-DU to the source gNB-DU to stop the source gNB-DU from transmitting data to the UE, after the target gNB-DU is determined.

14. The SN device according to any one of the claims 8-11, wherein the SN device further comprises a sixth transmit unit, and the sixth transmit unit is configured to:
receive uplink data transmitted by the UE after the message comprising the TEID of downlink data is transmitted to the MN; and
determine that the uplink data is an MCG split bearer, and forward the uplink data to the MN; or,
determine that the uplink data is an SCG split bearer, and forward the uplink data to the gNB-CU.

15. A computer-readable storage medium storing a computer program, wherein when the computer program is executed by a processor of a secondary node, SN, the processor performs the method according to any one of the claims 1-7.

## Patentansprüche

1. Ein Verfahren zur PSCell-Umschaltung, das auf ein engmaschiges LTE-5GC Interworking-Szenario anwendbar ist, wobei Sekundärknoten, SN, in dem engmaschigen LTE-5GC Interworking-Szenario zwischen Zentraleinheiten, CU, und Verteileinheiten, DU, aufgeteilt werden, **dadurch gekennzeichnet, dass** das Verfahren Folgendes aufweist:
Empfangen, durch eine Zentraleinheit von gNodeB, gNB-CU, in einem Sekundärknoten, SN, einer Messberichtsmeldung von einem Benutzergerät;
Bestimmen, durch die gNB-CU, ob eine PSCell-Umschaltung für das UE gemäß einem in der Messberichtsmeldung enthaltenen Messergebnis durchgeführt werden kann, und Bestimmen (S101), durch die gNB-CU, dass das UE von einer Quellenverteileinheit von gNodeB, gNB-DU, zu einer Ziel-gNB-DU gemäß der Messberichtsmeldung wechselt, wenn bestimmt wird, dass die PSCell des UE umgeschaltet werden kann; sowie
Übertragen (S102), durch den SN, einer Meldung mit einer Tunnelendpunkt-Kennung, TEID, an einen Master-Knoten, MN, so dass der MN und das UE über die Ziel-gNB-DU Daten austauschen, wobei die TEID eine Datenverbindung zwischen der Ziel-gNB-DU und dem MN erkennt.

2. Das Verfahren nach Anspruch 1, welches nach dem Bestimmen der Ziel-gNB-DU weiterhin Folgendes aufweist:
Übertragen, durch den SN, einer Meldung, die dem UE über einen Sekundärzellgruppen-Signalisierungsfunkträger, SCG SRB, die Ziel-gNB-DU anzeigt, so dass das UE ein Direktzugriffsverfahren mit der Ziel-gNB-DU durchführt.

3. Das Verfahren nach Anspruch 1, wobei das Übertragen der die TEID enthaltenden Meldung Folgendes aufweist:
Erzeugen (S201), durch den SN, einer neuen, die TEID enthaltenden Meldung; sowie
Übertragen (S202), durch den SN, der neuen Meldung an den MN.

4. Das Verfahren nach Anspruch 1, wobei das Übertragen der die TEID enthaltenden Meldung an den MN Folgendes aufweist:
Übermitteln (S203), durch den SN, der TEID in einer SgNB Modification Required Meldung (Meldung über erforderliche Änderung); und
Übertragen (S204), durch den SN, der SgNB Modification Required Meldung an den MN.

5. Das Verfahren nach einem der Ansprüche 1 bis 4, welches nach der Bestimmung der Ziel-gNB-DU weiterhin Folgendes aufweist:
Übertragen, durch den SN, einer Anforderung zum Wechseln der Quellen-gNB-DU zur Ziel-gNB-DU, so dass die Ziel-gNB-DU einen Kontext für das UE erzeugt.

6. Das Verfahren nach einem der Ansprüche 1 bis 4, welches nach der Bestimmung, dass das UE von der Quellen-gNB-DU zur Ziel-gNB-DU wechselt, weiterhin Folgendes aufweist:
Übertragen, durch den SN, einer Meldung, die anzeigt, dass das UE von der Quellen-gNB-DU zur Ziel-gNB-DU wechselt, an die Quellen-gNB-DU, um zu verhindern, dass die Quellen-gNB-DU Daten an das UE überträgt.

7. Das Verfahren nach einem der Ansprüche 1 bis 4, welches nach der Übertragung der die TEID enthaltenden Meldung an den MN weiterhin Folgendes aufweist:
Empfangen (S301), durch den SN, von durch das UE übertragenen Uplink-Daten; und
Bestimmen (S302), durch den SN, dass die Uplink-Daten einen Hauptzellgruppen-, MCG, Split-Bearer darstellen, und Weiterleiten der Uplink-Daten an den MN; oder
Bestimmen (S303), durch den SN, dass die Uplink-Daten einen SCG Split-Bearer darstellen, und Weiterleiten der Uplink-Daten an die gNB-CU.

8. Eine SN-Vorrichtung zur PSCell-Umschaltung, die auf ein engmaschiges LTE-5GC Interworking-Szenario anwendbar ist, wobei Sekundärknoten, SN, in dem engmaschigen LTE-5GC Interworking-Szenario zwischen Zentraleinheiten, CU, und Verteileinheiten, DU, aufgeteilt werden, **dadurch gekennzeichnet, dass** die SN-Vorrichtung Folgendes aufweist:
eine Bestimmungseinheit konfiguriert zum Empfangen einer Messberichtsmeldung von einem UE, zum Bestimmen, ob eine PSCell-Umschaltung für das UE gemäß einem in der Messberichtsmeldung enthaltenen Messergebnis durchgeführt werden kann, und Bestimmen, dass das UE von einer Quellen-gNB-DU zu einer Ziel-gNB-DU gemäß der Messberichtsmeldung wechselt, wenn bestimmt wird, dass die PSCell des UE umgeschaltet werden kann; und
eine erste Übertragungseinheit konfiguriert zum Übertragen einer eine TEID enthaltenden Meldung an einen MN, so dass der MN und das UE über die Ziel-gNB-DU Daten austauschen, wobei die TEID eine Datenverbindung zwischen der Ziel-gNB-DU und dem MN erkennt.

9. Die SN-Vorrichtung nach Anspruch 8, wobei die SN-Vorrichtung eine zweite Übertragungseinheit aufweist und die zweite Übertragungseinheit dazu konfiguriert ist:
eine die Ziel-gNB-DU anzeigende Meldung an das UE über eine SCG SRB zu übertragen, so dass das UE ein Direktzugriffsverfahren mit der Ziel-gNB-DU durchführt, nachdem die Ziel-gNB-DU bestimmt wird.

10. Die SN-Vorrichtung nach Anspruch 8, wobei die SN-Vorrichtung eine Erzeugungseinheit aufweist und die Erzeugungseinheit dazu konfiguriert ist:
eine neue, die TEID enthaltende Meldung zu erzeugen; und
die neue Meldung an den MN zu übertragen.

11. Die SN-Vorrichtung nach Anspruch 8, wobei die SN-Vorrichtung eine dritte Übertragungseinheit aufweist und die dritte Übertragungseinheit dazu konfiguriert ist:
die TEID in einer SgNB Modification Required Meldung zu übermitteln; und
die SgNB Modification Required Meldung an den MN zu übertragen.

12. Die SN-Vorrichtung nach einem der Ansprüche 8 bis 11, wobei die SN-Vorrichtung eine vierte Übertragungseinheit aufweist und die vierte Übertragungseinheit dazu konfiguriert ist:
eine Anforderung zum Wechseln des UE von der Quellen-gNB-DU zur Ziel-gNB-DU zu übertragen, so dass die Ziel-gNB-DU einen Kontext für das UE erzeugt, nachdem die Ziel-gNB-DU bestimmt wird.

13. Die SN-Vorrichtung nach einem der Ansprüche 8 bis 11, wobei die SN-Vorrichtung eine fünfte Übertragungseinheit aufweist und die fünfte Übertragungseinheit dazu konfiguriert ist:
eine Meldung, die anzeigt, dass das UE von der Quellen-gNB-DU zur Ziel-gNB-DU wechselt, an die Quellen-gNB-DU zu übertragen, um zu verhindern, dass die Quellen-gNB-DU Daten an das UE überträgt, nachdem die Ziel-gNB-DU bestimmt wird.

14. Die SN-Vorrichtung nach einem der Ansprüche 8 bis 11, wobei die SN-Vorrichtung weiterhin eine sechste Übertragungseinheit aufweist und die sechste Übertragungseinheit dazu konfiguriert ist:
durch das UE übertragene Uplink-Daten zu empfangen, nachdem die die TEID von Downlink-Daten enthaltende Meldung an den MN übertragen wird; sowie
zu bestimmen, dass die Uplink-Daten einen MCG Split-Bearer darstellen, und die Uplink-Daten an den MN weiterzuleiten; oder
zu bestimmen, dass die Uplink-Daten einen SCG Split-Bearer darstellen, und die Uplink-Daten an die gNB-CU weiterzuleiten.

15. Ein computerlesbares Speichermedium, das ein Computerprogramm speichert, wobei, wenn das Computerprogramm von einem Prozessor eines Sekundärknotens, SN, ausgeführt wird, der Prozessor das Verfahren nach einem der Ansprüche 1 bis 7 durchführt.

## Revendications

1. Procédé de changement de PSCell applicable à un scénario d'interfonctionnement étroit LTE-5GC, dans lequel des nœuds secondaires, SN, dans le scénario d'interfonctionnement étroit LTE-5GC sont répartis entre des unités centrales, CU, et des unités de distribution, DU, caractérisé ce que le procédé comporte les étapes consistant à :
recevoir, par une unité centrale de gNodeB, gNB-CU, dans un nœud secondaire, SN, un message de rapport de mesure provenant d'un équipement d'utilisateur ;
déterminer, par la gNB-CU, si un changement de PSCell peut être effectué pour l'UE d'après un résultat de mesure inclus dans le message de rapport de mesure, et déterminer (S101), par la gNB-CU, que l'UE passe d'une unité de distribution source du gNodeB, gNB-DU, à une gNB-DU cible d'après le message de rapport de mesure lors de la détermination que la PSCell de l'UE peut être changée ; et
transmettre (S102), par le SN, un message comportant un identifiant de point de fin de tunnel, TEID, à un nœud maître, MN, de sorte que le MN et l'UE échangent des données via la gNB-DU cible, dans lequel le TEID identifie une liaison de données entre la gNB-DU cible et le MN.

2. Procédé selon la revendication 1, comportant en outre, après la détermination de la gNB-DU cible, l'étape consistant à :
transmettre, par le SN, un message indiquant la gNB-DU cible à l'UE via une porteuse radio de signalisation de groupe de cellules secondaires, SCG SRB, de sorte que l'UE exécute une procédure d'accès aléatoire avec la gNB-DU cible.

3. Procédé selon la revendication 1, dans lequel la transmission du message comportant le TEID au MN comporte les étapes consistant à :
générer (S201), par le SN, un nouveau message comportant le TEID ; et
transmettre (S202), par le SN, le nouveau message au MN.

4. Procédé selon la revendication 1, dans lequel la transmission du message comportant le TEID au MN comporte les étapes consistant à :
transporter (S203), par le SN, le TEID dans un message de modification de SgNB requise ; et transmettre (S204), par le SN, le message de modification de SgNB requise au MN.

5. Procédé selon l'une quelconque des revendications 1 à 4, comportant en outre, après la détermination de la gNB-DU cible, l'étape consistant à :
transmettre, par le SN, une requête de passage de l'UE de la gNB-DU source à la gNB-DU cible, de sorte que la gNB-DU cible crée un contexte pour l'UE.

6. Procédé selon l'une quelconque des revendications 1 à 4, comportant en outre, après la détermination que l'UE passe de la gNB-DU source à la gNB-DU cible, l'étape consistant à :
transmettre, par le SN, un message indiquant que l'UE passe de la gNB-DU source à la gNB-DU cible, à la gNB-DU source pour que la gNB-DU source arrête de transmettre des données à l'UE.

7. Procédé selon l'une quelconque des revendications 1 à 4, comportant en outre, après la transmission du message comportant le TEID au MN, les étapes consistant à :
recevoir (S301), par le SN, des données de liaison montante transmises par l'UE ; et
déterminer (S302), par le SN, que les données de liaison montante sont une porteuse scindée de groupe de cellules principales, MCG, et transférer les données de liaison montante au MN ; ou,
déterminer (S303), par le SN, que les données de liaison montante sont une porteuse scindée de SCG, et transférer les données de liaison montante à la gNB-CU.

8. Dispositif de SN de changement de PSCell applicable à un scénario d'interfonctionnement étroit LTE-5GC, dans lequel des nœuds secondaires, SN, dans le scénario d'interfonctionnement étroit LTE-5GC sont répartis entre des unités centrales, CU, et des unités de distribution, DU, caractérisé ce que le dispositif de SN comporte :
une unité de détermination configurée pour recevoir un message de rapport de mesure provenant d'un UE, déterminer si un changement de PSCell peut être effectué pour l'UE d'après un résultat de mesure inclus dans le message de rapport de mesure, et déterminer que l'UE passe d'une gNB-DU source à une gNB-DU cible d'après le message de rapport de mesure lors de la détermination que la PSCell de l'UE peut être changée ; et
une première unité de transmission configurée pour transmettre un message comportant un TEID à un MN, de sorte que le MN et l'UE échangent des données via la gNB-DU cible, dans lequel le TEID identifie une liaison de données entre la gNB-DU cible et le MN.

9. Dispositif de SN selon la revendication 8, dans lequel le dispositif de SN comporte une deuxième unité de transmission, et la deuxième unité de transmission est configurée pour :
transmettre un message indiquant la gNB-DU cible à l'UE via une SCG SRB de sorte que l'UE exécute une procédure d'accès aléatoire avec la gNB-DU cible, après que la gNB-DU cible est déterminée.

10. Dispositif de SN selon la revendication 8, dans lequel le dispositif de SN comporte une unité de génération, et l'unité de génération est configurée pour :
générer un nouveau message comportant le TEID ; et
transmettre le nouveau message au MN.

11. Dispositif de SN selon la revendication 8, dans lequel le dispositif de SN comporte une troisième unité de transmission, et la troisième unité de transmission est configurée pour :
transporter le TEID dans un message de modification de SgNB requise ; et
transmettre le message de modification de SgNB requise au MN.

12. Dispositif de SN selon l'une quelconque des revendications 8 à 11, dans lequel le dispositif de SN comporte une quatrième unité de transmission, et la quatrième unité de transmission est configurée pour :
transmettre une requête de passage de l'UE de la gNB-DU source à la gNB-DU cible, de sorte que la gNB-DU cible crée un contexte pour l'UE, après que la gNB-DU cible est déterminée.

13. Dispositif de SN selon l'une quelconque des revendications 8 à 11, dans lequel le dispositif de SN comporte une cinquième unité de transmission, et la cinquième unité de transmission est configurée pour :
transmettre un message indiquant que l'UE passe de la gNB-DU source à la gNB-DU cible, à la gNB-DU source pour que la gNB-DU source arrête de transmettre des données à l'UE, après que la gNB-DU cible est déterminée.

14. Dispositif de SN selon l'une quelconque des revendications 8 à 11, dans lequel le dispositif de SN comporte en outre une sixième unité de transmission, et la sixième unité de transmission est configurée pour :
recevoir des données de liaison montante transmises par l'UE après que le message comportant le TEID de données de liaison descendante est transmis au MN ; et
déterminer que les données de liaison montante sont une porteuse scindée de MCG, et transférer les données de liaison montante au MN ; ou,
déterminer que les données de liaison montante sont une porteuse scindée de SCG, et transférer les données de liaison montante à la gNB-CU.

15. Support de stockage lisible par ordinateur stockant un programme informatique, dans lequel lorsque le programme informatique est exécuté par un processeur d'un nœud secondaire, SN, le processeur met en œuvre le procédé selon l'une quelconque des revendications 1 à 7.
